# EUROPÄISCHE PATENTSCHRIFT

(11) **EP 1 526 059 B1**
(45) Veröffentlichungstag und Bekanntmachung des Hinweises auf die Patenterteilung: **10.02.2010**
(21) Anmeldenummer: 04104876.0
(22) Anmeldetag: 05.10.2004
(51) Int. Cl.: B62D 1/16

(54) **Lenkstockmodul**
Steering Column Module
Module de commande sous volant

(30) Priorität: 23.10.2003 DE 10350291
(43) Veröffentlichungstag der Anmeldung: 27.04.2005
(73) Patentinhaber: Valeo Schalter und Sensoren GmbH, 74321 Bietigheim-Bissingen (DE)
(72) Erfinder: Simonis, Karl, 75428, Illingen (DE); Lipfert, Rainer, 74076, Heilbronn (DE); Hasch, Martin, 71701, Schwieberdingen (DE); Grüner, Roland, 71732, Tamm (DE); Binder, Bernd, Walter-Kriebel-Weg 1 D-74372 Sersheim (DE); Suchanek, Jürgen, Heilbronner Str. 60 74363, Güglingen (DE)
(74) Vertreter: Vötsch, Reiner

(56) Entgegenhaltungen:
- EP-A- 1 065 107
- EP-A- 1 319 573
- WO-A-98/43855
- DE-A1- 19 942 818

## Beschreibung

Die Erfindung betrifft ein Lenkstockmodul mit einem an einem Mantelrohr zu befestigenden stationären Modulteil und einem mittels einerLenkspindel angetriebenen drehbaren Rotor, wobei der Rotor mit radialem Spiel im oder am stationären Modulteil gelagert ist

Lenkstockmodule sind in einer Vielzahl bekannt. Diese Lenkstockmodule tragen In der Regel die Lenkstockschalter und können mit einem Aufnahmeraum für eine Wickelfeder versehen sein, mit welcher elektrische Daten vom feststehenden Teil des Fahrzeugs auf das sich drehende Lenkrad übertragen werden. Außerdem kann das Lenkstockmodul noch mit einem Lenkwinkelsensor versehen sein, mit dem die Position des Lenkrades bestimmt wird. DiesesLenkstockmodul, welches einen stationären Modulteil und einen sich drehenden Rotor aufweist, wird am Mantelrohr der Lenksäule befestigt, so dass der stationäre Modulteil ortsfest ist. Dabei durchgreift die Lenkstockspindel das Lenkstockmodul, so dass auf das freie Ende der Lenkstockspindel das Lenkrad aufgesetzt werden kann. Beim Befestigen des Lenkstockmoduls am Mantelrohr muss darauf geachtet werden, dass das Lenkstockmodul möglichst genau d.h. koaxial zur Lenkstockspindel ausgerichtet ist, so dass sich beim Drehen des Lenkrads, wobei sich dadurch auch die Lenkstockspindel dreht, keine störenden Geräusche erzeugt werden. Da die Lenkstockspindel oftmals aufgrund eines radialen Seitenschlags eine Taumelbewegung durchführt, Ist es äußerst wichtig, dass das Lenkstockmodul möglichst zentriert zur Lenkstockspindel ausgerichtet ist.

Üblicherweise besitzt der Rotor ein axiales Spiel gegenüber dem stationären Modulteil, so dass der Rotor einer Taumelbewegung der Lenkspindel folgen kann. Wird ein derartiges Lenkstockmodul montiert, dann kann bis zur Montage des Lenkrads nicht sichergestellt werden, dass der Rotor seine koaxiale Lage bezüglich der Lenkstockspindel beibehält. Nach dem Aufsetzen des Lenkstockmoduls auf das Mantelrohr und die Lenkstockspindel kommt es oftmals vor, dass der Rotor verrutscht, bevor das Lenkrad befestigt wurde, und dann versetzt zur Lenksteckspindel angeordnet ist. Aufgrund des Versatzes kann es zu störenden Geräuschen kommen, eventuell sogar zu einem vorzeitigen Ausfall wegen unzulässig hohem Verschleiß.
Aus der EP 1065107 A2 ist ein Lenkstockmodul mit einem an einer Lenkwelle befestigbaren stationären Modulteil, welches einen Rotor und einen mit dem Rotor gekoppelten Rückstellnocken für eine Blinkereinrichtung aufweist. Der Rückstellnocken ist hierbei an einem ringförmigen Kragenelement angeordnet, welches wiederum mit dem Rotor starr koppelbar ist. Um eine radial lagerichtige Befestigung des Kragenelements am Rotor zu ermöglichen weist das Kragenelement unterschiedlich große Befestigungsvorsprünge auf, die mit entsprechend angeordneten Aufnahmen im Rotor zusammenwirken und eine Befestigung des Kragenelements am Rotor nur in einer einzigen radialen Winkellage ermöglichen. Dabei ist der Rotor über einen Verriegelungsring spielfrei mit dem stationären Modulteil verriegelbar.

Der Erfindung liegt daher die Aufgabe zugrunde, ein Lenkstockmodul der eingangs genannten Art derart auszugestalten, dass dessen Befestigung an der Lenkstockspindel weniger toleranzbehaftet ist.

Diese Aufgabe wird mit einem Lenkstockmodul mit den Merkmalen des Anspruchs 1 gelöst. Vorteilhafte Weiterbildungen sind in den Unteransprüchen anzugeben.

Dadurch, dass der Verriegelungsring In radialer Richtung spielfrei im Rotor oder an der Lenkspindel gelagert ist, ist sichergestellt, dass nicht nur das stationäre Modulteil gegenüber dem Mantelrohr, sondern auch der Rotor gegenüber der Lenkspindel exakt ausgerichtet ist. Schon beim Aufschieben des Lenkstockmoduls auf das Mantelrohr und das Ende der Lenkspindel erfolgt die automatische Ausrichtung des Lenkstockmoduls. Justierarbeiten sind daher nicht mehr erforderlich.

Bei einer Variante ist vorgesehen, dass der Verriegelungsring In seiner Verriegelungslage den Rotor gegenüber dem stationären Modulteil gegen Verdrehen sichert. Dies hat den Vorteil, dass die Wickelfeder ihre Lege Innerhalb des Lenkstockmoduls belbehält und keine gesonderten Verdrehstcherungen mehr erforderlich sind. Diese Verdrehsicherung wirkt so lange, wie sich der Verriegelungsring In seiner Verriegelungslage befindet. Beim Abnehmen eines bereits montierten Lenkrads nimmt der Verriegelungsring wieder seine Verriegelungslage ein, so dass hierdurch der Rotor wieder gegenüber dem stationären Modulteil verdrehgeslchert ist. Somit besitzt der Verriegelungsring eine Doppelfunktion, da er für die zentrale Ausrichtung des Rotors und für die Blockierung der Verdrehung bei abgenommenem Lenkrad sorgt.

Bei einer Weiterbildung ist vorgesehen, dass der Verriegelungsring wenigstens einen Finger aufweist, der eine radial abstehende Nase besitzt, die in der Verriegelungslage des Verriegelungsrings in einen radialen Durchbruch im stationären Modulteil eingreift. Diese radial abstehende Nase kann mit der Kellfläche versehen sein, mit der der Verriegelungsring und der Rotorbezüglich des stationären Modulteils ausgerichtet werden. Die Nase kann aber auch als Verdrehsicherung wirken. Hierfür greift sie in der Verriegelungslage des Verriegelungsrings in eine axiale Ausnehmung des stationären Modulteils ein, aus der sie beim Einschieben des Verriegelungsrings, was beim Aufsetzen des Lenkrads erfolgt, ausgehoben wird. Dadurch wird die Verdrehsicherung gelöst.

Eine spezielle Lagerung des Rotors bezüglich des stationären Modulteils, mit dem eine Taumelbewegung des Rotors ohne die Bildung von störenden Geräuschen ermöglicht wird, wird dadurch geschaffen, dass der Rotor über eine schneidenförmige Abstützung oder über mehrere Noppen auf einer Axialfläche des stationären Modulteils gelagert ist. Dabei kann für die Lagerfläche beziehungsweise die Schneide oder die Noppen ein für Lagerungen geeigneter Kunststoff verwendet werden beziehungsweise kann in diesem Bereich des Lagers ein geeigneter Schmierstoff eingesetzt werden. Auf jeden Fall erzeugt eine Taumelbewegung des Rotors gegenüber dem stationären Modulteil kein störendes Geräusch.

Weitere Vorteile, Merkmale und Einzelheiten der Erfindung ergeben sich aus den Unteransprüchen sowie der nachfolgenden Beschreibung, in der unter Bezugnahme auf die Zeichnung ein besonders bevorzugtes Ausführungsbeispiel im Einzelnen beschrieben ist. Dabei können die in der Zeichnung dargestellten und in der Beschreibung sowie in den Ansprüchen erwähnten Merkmale jeweils einzeln für sich oder in beliebiger Kombination erfindungswesentlich sein.

In der Zeichnung zeigen:
- Figur 1: eine Explosionsdarstellung, teilweise aufge- schnitten, eines Ausführungsbelspiels des erfidungsgemäßen Lenkstockmoduls;

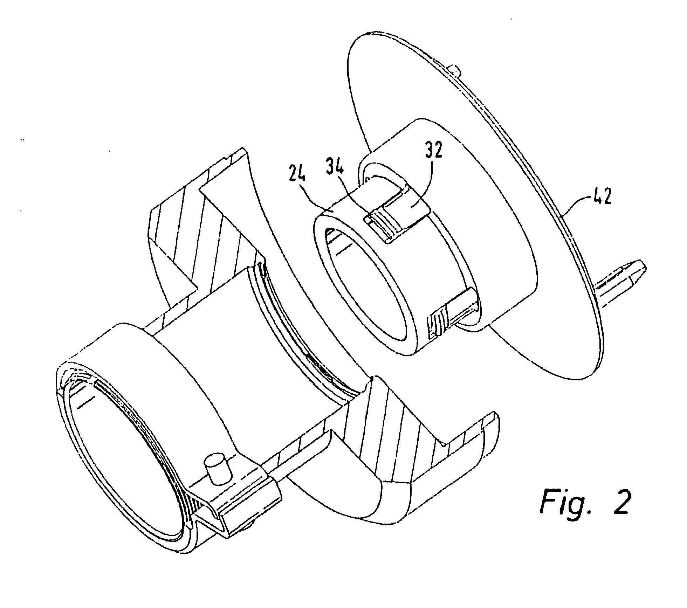

- Figur 2: die Ansicht gemäß Figur 1 mit in den Rotor eingeschobenem Verriegelungsring;
- Figur 3: einen Längsschnitt durch das obere Ende ei- ner Lenksäule sowie das Lenkstockmodul;
- Figur 4: eine Ansicht gemäß Figur 3 mit aufgesetztem Lenkrad und entriegeltern Lenkstockmodul; und
- Figur 5: eine vergrößerte Wiedergabe des Aus- schnitts V gemäß Figur 4.

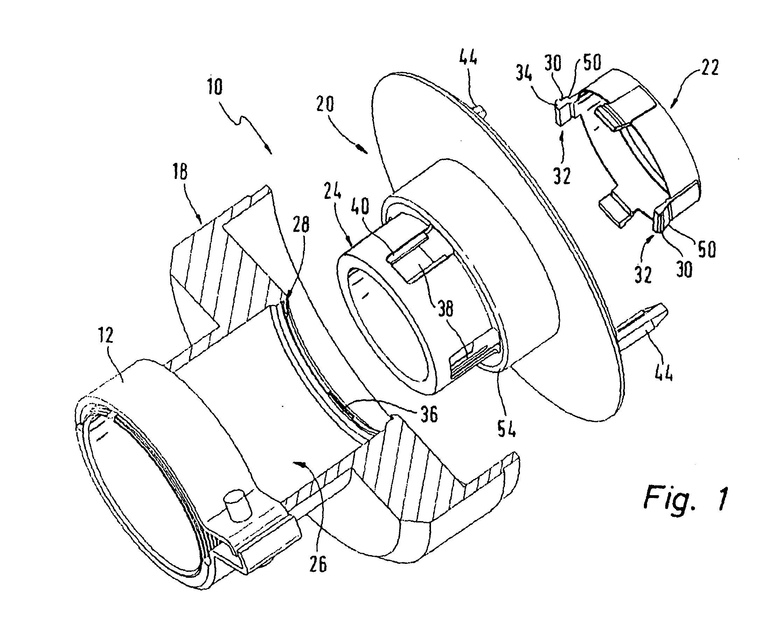

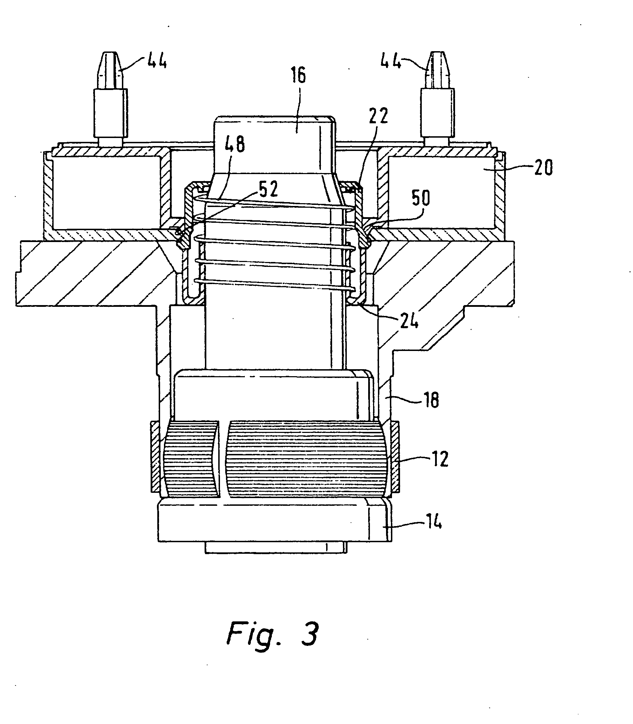

Die Figur 1 zeigt ein Insgesamt mit 10 bezeichnetes Lenkstockmodul, welches, wie in Figur 3 dargesteilt, mit einer Schelle 12 an das obere Ende eines Mantelrohrs 14 einer Lenksäule befestigt Ist. Das Lenkstockmodul 10 weist einen stationären Modulteil 18, einen Rotor 20 und einen Verriegelungsring 22 auf. Der stationäre Modulteil 18 besitzt, wie in der Figur 3 dargestellt, an seinem unteren Ende ein Kugelgelenk, so dass das Lenkstockmodul 10 bezüglich des Mantelrohrs 14 und der Lenkspindel 16 ausgerichtet, d.h. zentriert werden kann. Zur Aufnahme einer am Rotor 20 nach unten abragenden Lagerbüchse 24 besitzt der stationäre Modulteil 18 eine Lageraufnahme 26, die an ihrem oberen Ende einen nach Innen vorspringenden Kragen 28 aufweist.

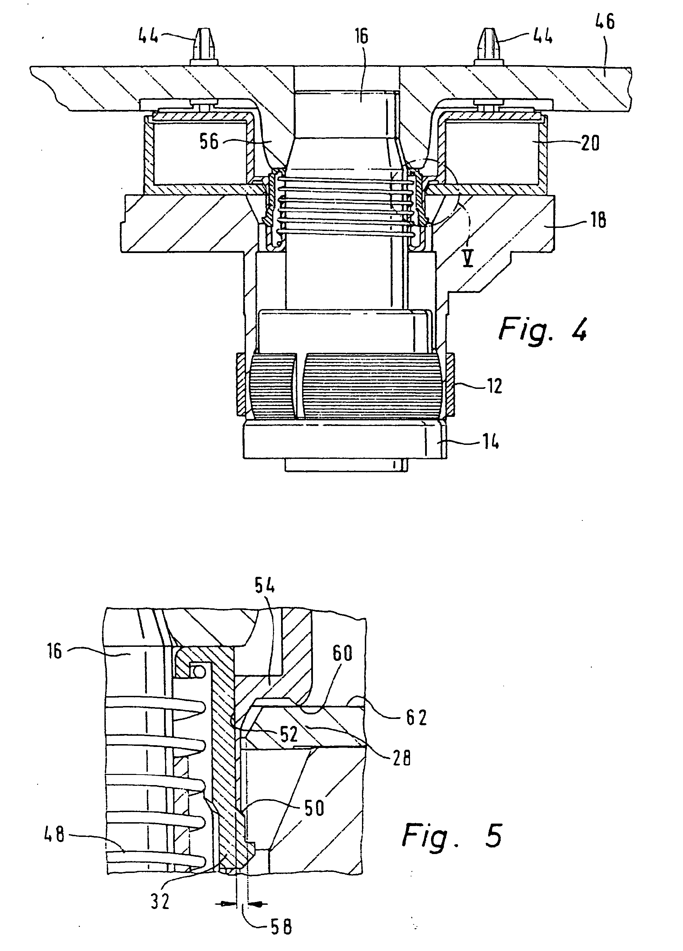

Dieser Kragen 28 weist einen Innendurchmesser auf, der dem Abstand von Außenoberflächen 30 von einander gegenüberliegenden Fingern 32 des Verriegelungsrings 22 entspricht. Diese Außenoberfläche 30 wird dann noch von Nasen 34 übergriffen. Diese Nasen 34 rasten in radiale Ausnehmungen 36 ein, die ebenfalls am Kragen 28 vorgesehen sind. Der Verriegelungsring 22 wird von der Lagerbüchse 24 aufgenommen, wie es aus den Figuren 3 und 4 ersichtlich ist. Dabei durchgreifen die Finger 32 radiale Durchbrüche 38 und werden nach innen von Führungsleisten 40 abgestützt.

Der stationäre Modulteil 18 und der Aufnahmeraum für eine nicht dargestellte Wickelfeder wird nach oben von einer Rotorscheibe 42 abgeschlossen, wie es deutlich in den Figuren 3 und 4 dargestellt ist. Diese Rotorscheibe 42 weist zwei nach oben axial abragende Zapfen 44 auf, die in ein Lenkrad 46 eingreifen, so dass durch Drehen des Lenkrads 46 die Zapfen und somit die Rotorscheibe 42 beziehungsweise der gesamte Rotor 20 in Drehung versetzt wird.

In der Figur 3 ist das Lenkrad 46 noch nicht aufgesetzt und der Verriegelungsring 22 nimmt seine Verriegelungslage ein, in welcher er von einer Wendelfeder 48 gehalten wird. Die Wendelfeder 48 ist in der Lagerbüchse 24 gelagert und greift am oberen Ende des Verriegelungsrings 22 an. Dabei liegt eine die Außenoberfläche 30 nach oben begrenzende Keilfläche 50 eines jeden Fingers 32 an einer Keilgegenfläche 52 an, die an einer Schulter 54 der Lagerbüchse 24 vorgesehen ist. Außerdem wird der Verriegelungsring 22 innerhalb des Kragens 28 durch Anlage der Finger 32 mit ihren Außenoberflächen 30 bezüglich des stationären Modulteils 18 zentriert. Auf diese Weise wird der Rotor 20 mittels des Verriegelungsrings 22 koaxial zum stationären Modulteil 18 ausgerichtet.

Wird, wie in Figur 4 dargestellt, das Lenkrad 46 auf das freie Ende der Lenkspindel 16 aufgesetzt, dann drückt eine Nabe 56 des Lenkrads 46 den Verriegelungsring 22 entgegen der Kraft der Wendelfeder 48 axial in die Lagerbüchse 24 ein und hebt die Keilfläche 50 der Finger 32 von der Keilgegenfläche 52 der Schulter 54 ab, wie in Figur 5 dargestellt. Dadurch kommt der Rotor 20 vom stationären Modulteil 18 frei und kann sich in radialer Richtung innerhalb des Spiels 58 bezüglich des stationären Modulteils 18 bewegen.

Außerdem werden die Nasen 34 axial aus den Ausnehmungen 36 ausgehoben, wodurch die Verdrehsicherung des Rotors 20 bezüglich des stationären Modulteils 18 ebenfalls aufgehoben wird.

In Figur 5 ist außerdem eine schneidenförmige Lagerung 60 erkennbar, die sich auf einer Axialfläche 62 des stationären Modulteils 18 abstützt. An Stelle der schneidenförmigen Lagerung 60 können auch mehrere Noppen vorgesehen sein ,die die Abstützung des Rotors 20 übernehmen. Da sich die Lagerung 60 leicht auf der Axialfläche 62 verschieben lässt, werden keine störenden Geräusche erzeugt. Der Rotor 20 kann somit einer eventuellen Taumelbewegung der Lenkspindel 16 folgen und radiale Relativbewegungen bezüglich des stationären Modulteils 18 ausführen.

Da der Verriegelungsring 22 durch die Wendelfeder 48 in Richtung seiner, in der Figur 3 dargestellten Verriegelungslage federbelastet ist, nimmt der Verriegelungsring 22 beim Lösen des Lenkrades 46 von der Lenkspindel 16 sofort seine Verriegelungslage selbständig ein und zentriert den Rotor 20 bezüglich des stationären Modulteils 18 und sichert den Rotor 20 gegen Verdrehung.

## Patentansprüche

1. Lenkstockmodul (10) mit einem an einem Mantelrohr (14) zu befestigenden stationären Modulteil (18) und einem mittels einer Lenkspindel (16) angetriebenen drehbaren Rotor (20), wobei der Rotor (20) mit radialem Spiel im oder am stationären Modulteil (18) gelagert ist, wobei der Rotor (20) einen auf die Lenkspindel (16) spielfrei aufschiebbaren Rotorabschnitt aufweist, wobei der Rotor (20) über einen axial im Rotor (20) verschieblich gelagerten Verriegelungsring (22) spielfrei mit dem stationären Modulteil (18) verriegelbar ist, wobei der Rotor (20) mit radialen Durchbrüchen (38) versehen ist, durch die Finger (32) des Verriegelungsrings (22) ragen, die eine radial nach außen weisende Keilfläche (50) aufweisen, die in einer Verriegelungslage mit einer an dem Modulteil (18) oder dem Rotor (20) radial nach innen weisenden Keilgegenfläche (52) zusammenwirken, und wobei der Verriegelungsring (22) aus seiner Verriegelungslageentgegen der Federkraft einer Feder, insbesondere einer Wendelfeder (48) in eine Entriegelungslage bringbar ist, in der die Wirkverbindung zwischen der Keilfläche (50) und der Keilgegenfläche (52) aufgehoben ist, und in welcher der Rotor (20) bezüglich des stationären Modulteils (18) radial verlagerbar ist.

2. Lenkstockmodul nach Anspruch 1, **dadurch gekennzeichnet, dass** der Verriegelungsrlng (22) in radialer Richtung spielfrei Im Rotor (20) oder an der Lenkspindel (16) gelagert ist.

3. Lenkstockmodul nach einem der vorhergehenden Ansprüche, **dadurch gekennzeichnet, dass** der Verrtegetungsring (22) in seiner Verriegelungslage den Rotor (20) gegenüber dem stationären Modulteil (18) gegen Verdrehen sichert.

4. Lenkstockmodul nach einem der vorhergehenden Ansprüche, **dadurch gekennzeichnet, dass** der Finger der eine radial abstehende Nase (34) aufweist, die In der Verriegelungslage des Verriegelungsrings (22) in eine radiale Ausnehmung (36) Im stationären Modulteil (18) eingreift.

5. Lenkstockmodul nach einem der vorhergehenden Ansprüche, **dadurch gekennzeichnet, dass** der Rotor (20) über eine schneidenförmige Abstützung (60) auf einer Axialfläche (62) des stationären Modulteils (18) gelagert ist.

## Claims

1. Steering column module (10) having a stationary module part (18) for fastening to a casing tube (14) and having a rotatable rotor (20) which is driven by means of a steering spindle (16), with the rotor (20) being mounted with radial play in or on the stationary module part (18), with the rotor (20) having a rotor portion which can be pushed without play onto the steering spindle (16), with it being possible for the rotor (20) to be locked to the stationary module part (18) without play by means of a locking ring (22) which is mounted in an axially movable manner in the rotor (20), with the rotor (20) being provided with radial apertures (38) through which fingers (32) of the locking ring (22) project, which fingers (32) have a radially outwardly pointing wedge surface (50) which interacts, in a locking position, with a radially inwardly pointing counterpart wedge surface (52) on the module part (18) or on the rotor (20), and with it being possible for the locking ring (22) to be moved from its locking position counter to the spring force of a spring, in particular of a helical spring (48), into an unlocking position in which the operative connection between the wedge surface (50) and the counterpart wedge surface (52) is eliminated, and in which the rotor (20) can be moved radially in relation to the stationary module part (18).

2. Steering column module according to Claim 1, **characterized in that** the locking ring (22) is mounted in the rotor (20) or on the steering spindle (16) without play in the radial direction.

3. Steering column module according to one of the preceding claims, **characterized in that** the locking ring (22), in its locking position, secures the rotor (20) against rotation relative to the stationary module part (18).

4. Steering column module according to one of the preceding claims, **characterized in that** the finger has a radially projecting lug (34) which, in the locking position of the locking ring (22), engages into a radial recess (36) in the stationary module part (18).

5. Steering column module according to one of the preceding claims, **characterized in that** the rotor (20) is mounted by means of a support (60), which is formed in the manner of a cutting edge, on an axial surface (62) of the stationary module part (18).

## Revendications

1. Module de colonne de direction (10) comprenant une partie de module stationnaire (18) à fixer à un tube enveloppe (14) et un rotor rotatif (20) entraîné au moyen d'un arbre de direction (16), le rotor (20) étant monté avec un jeu radial dans ou sur la partie de module stationnaire (18), le rotor (20) présentant une portion de rotor pouvant être poussée sans jeu sur l'arbre de direction (16), le rotor (20) pouvant être verrouillé sans jeu à la partie de module stationnaire (18) par le biais d'une bague de verrouillage (22) montée de manière mobile axialement dans le rotor (20), le rotor (20) étant pourvu de passages radiaux (38) à travers lesquels pénètrent des doigts (32) de la bague de verrouillage (22), qui présentent une surface de clavette (50) tournée radialement vers l'extérieur, qui coopèrent dans une position de verrouillage avec une surface conjuguée de clavette (52) tournée radialement vers l'intérieur sur la partie de module (18) ou sur le rotor (20), et la bague de verrouillage (22) pouvant être amenée, de sa position de verrouillage à l'encontre de la force de ressort d'un ressort, notamment d'un ressort hélicoïdal (48), dans une position de déverrouillage dans laquelle la liaison fonctionnelle entre la surface de clavette (50) et la surface conjuguée de clavette (52) est supprimée, et dans laquelle le rotor (20) peut être déplacé radialement par rapport à la partie de module stationnaire (18).

2. Module de colonne de direction selon la revendication 1, **caractérisé en ce que** la bague de verrouillage (22) est montée dans la direction radiale sans jeu dans le rotor (20) ou sur l'arbre de direction (16).

3. Module de colonne de direction selon l'une quelconque des revendications précédentes, **caractérisé en ce que** la bague de verrouillage (22), dans sa position de verrouillage, fixe en rotation le rotor (20) par rapport à la partie de module stationnaire (18).

4. Module de colonne de direction selon l'une quelconque des revendications précédentes, **caractérisé en ce que** le doigt présente un nez saillant radialement (34), qui vient en prise dans la position de verrouillage de la bague de verrouillage (22) dans un évidement radial (36) dans la partie de module stationnaire (18).

5. Module de colonne de direction selon l'une quelconque des revendications précédentes, **caractérisé en ce que** le rotor (20) est monté par le biais d'un support en forme d'arête de coupe (60) sur une surface axiale (62) de la partie de module stationnaire (18).
